# FASCICULE DE BREVET EUROPEEN

(11) **EP 1 437 867 B1**
(45) Date de publication et mention de la délivrance du brevet: **21.12.2005**
(21) Numéro de dépôt: 03290056.5
(22) Date de dépôt: 10.01.2003
(51) Int. Cl.: H04L 12/56, H04L 29/06

(54) **Signalisation dans les réseaux actifs pilotés**
Signalisierung in gesteuerten aktiven Netzwerken
Signalling in controlled activ networks

(43) Date de publication de la demande: 14.07.2004
(73) Titulaire: ALCATEL, 75008 Paris (FR)
(72) Inventeur: Levy, Thomas, 75013 Paris (FR); Marce, Olivier, 91300 Massy (FR)
(74) Mandataire: Chaffraix, Sylvain

(56) Documents cités:
- WO-A-01/11837
- WO-A-01/47213
- METZLER, B.; HARBAUM, T.; WITTMANN, R.; ZITTERBART, M.;: "AMnet: heterogeneous multicast services based on active networking " OPEN ARCHITECTURES AND NETWORK PROGRAMMING PROCEEDINGS, 1999. OPENARCH, 26 - 27 mars 1999, pages 98-105, XP002246765

## Description

L'invention concerne le pilotage des réseaux de télécommunication actifs et s'applique tout particulièrement aux réseaux utilisant le protocole IP (d'après la terminologie anglaise « INTERNET PROTOCOL »).

On connaît, dans le domaine de la téléphonie traditionnelle, des unités de commande de signalisation chargées d'acheminer des signaux de service que s'échangent des terminaux téléphoniques et différents centraux téléphoniques traversés par une communication. Ces signaux peuvent notamment comprendre des informations sur les coordonnées d'un terminal téléphonique visé lors d'une requête de communication, l'état d'une ligne (occupée/libre), la durée d'une communication et la facturation. Parmi les unités de commande de signalisation, on trouve les serveurs de type SIP proxy et softswitch, comme il est connu dans l'art.

On connaît en outre divers protocoles permettant à de telles unités de commande de signalisation de communiquer avec un réseau utilisant le protocole IP (ou réseau IP), parmi lesquels figurent les protocoles SIP et H323, cf. par exemple WO 01 /11 837. Le protocole SIP (pour « Session Initiation Protocol ») a été normalisé par l'I.E.T.F. (pour « Internet Engeneering Task Force ») et date de 1999. Comme le protocole H323, normalisé par l'I.T.U. (« International Telecommunication Union ») et mis en service en 1996, il régule les échanges entre des applications de transfert de données en temps réel sur les réseaux IP.

On connaît par ailleurs des réseaux dits actifs, dont le concept fut introduit lors des travaux du DARPA en 1994 et qui firent l'objet d'une première conférence internationale en 1999 : « International Workshop on Active Networks (IWAN 99) ».

Les travaux précités définissent un réseau actif comme un réseau dans lequel certains de ses composants (en particulier les noeuds du réseau) sont programmables dynamiquement par des entités connectées comme des opérateurs, des fournisseurs de services, des usagers ou des applications. La programmation dynamique peut concerner la signalisation, la supervision ou les données à transmettre.

Dans un réseau actif, les applications ne sont plus exécutées aux seules extrémités (par exemple les terminaux client et serveur) mais sont réparties sur tout le réseau. Le réseau est alors dit « actif » par opposition aux réseaux dits « passifs », dont les noeuds (ou routeurs) ont pour tâche principale d'aiguiller, c'est-à-dire de faire circuler l'information.

Cette information est classiquement scindée en paquets d'informations ou datagrammes, afin d'en faciliter la circulation.

Certains noeuds programmables ou noeuds actifs d'un réseau actif prennent en charge une partie des applications (multimédia, par exemple) et peuvent changer dynamiquement leurs comportements afin d'effectuer des traitements spécifiques à des applications de type client-serveur.

En dehors des composantes actives, les réseaux actifs conservent des composantes des réseaux classiques, telles que les serveurs mandataires chargés d'effectuer une liaison entre deux sous-réseaux d'un réseau, comme il est connu dans l'art. De telles composantes peuvent, au minimum, être assimilées à un ordinateur connecté au réseau.

Un code actif est un code (ou un programme) exécutable par un ordinateur. Le code actif est habituellement contenu ou référencé dans un flux de données reçu par les noeuds (ou routeurs) actifs et est exécuté au niveau des noeuds, dans un environnement d'exécution donné. Une telle architecture permet notamment de modifier les fonctionnalités du réseau sur demande selon, par exemple, la nature des données à transmettre.

Toute application de type réseau peut tirer avantage de la flexibilité d'un réseau actif. En particulier, les codes déployés dans les noeuds actifs permettent une adaptation dynamique de la qualité de service (ou QoS selon la terminologie anglaise « quality of service ») et du routage aux conditions instantanées (congestion du réseau, indisponibilité d'une route, etc.) auxquelles est soumis le réseau. Le déploiement de codes actifs permet également d'adapter les techniques de codage vidéo et audio à l'INTERNET.

Pour les applications de type Multimédia sur IP (de l'anglais « Multimedia over IP »), le code à déployer est déterminé depuis le terminal requerrant le transfert de données (terminal client ou utilisateur).

Or, laisser à une application quelconque d'un utilisateur la possibilité d'associer du code actif au flux de données peut occasionner des problèmes d'inadéquation entre les caractéristiques de flux souhaitées par cette application et l'état instantané du réseau.

L'invention a pour but de résoudre ce problème.

L'invention propose ainsi un réseau de télécommunication actif comme indiqué dans la première revendication.

Selon un premier mode de réalisation préféré, l'unité de commande de signalisation comprend en outre : une bibliothèque de codes actifs ; et des moyens de sélection de code actif dans la bibliothèque.

Dans ce dernier cas, il peut être particulièrement avantageux que l'unité de commande de signalisation comprenne en outre des moyens de compilation de code actif.

Selon encore un autre mode de réalisation préféré, l'unité de commande de signalisation du réseau de télécommunication actif, selon l'invention, comprend en outre des moyens de génération de code actif à la volée.

Selon encore un autre mode de réalisation préféré, le réseau de télécommunication actif selon l'invention utilise le protocole IP.

L'invention concerne également un procédé de signalisation dans un réseau de télécommunication selon l'invention, comme indiqué dans la sixième revendication.

Selon un premier mode de réalisation préféré, le procédé comprend une étape de décision d'une stratégie d'envoi du code actif approprié par l'unité de commande de signalisation ; cette étape étant préalable à l'étape d'envoi, et étant postérieure à l'étape de mise en place de circuit virtuel.

Selon un deuxième mode de réalisation préféré, le procédé selon l'invention comprend une étape de détermination du code actif approprié par l'unité de commande de signalisation ; cette étape étant préalable à l'étape d'envoi et pouvant être ou non préalable à l'étape de décision de stratégie.

Dans ce dernier cas, il est avantageux que le procédé comprenne une étape de négociation entre les terminaux et l'unité de commande de signalisation des caractéristiques d'une session de communication ; cette étape étant préalable à l'étape de détermination.

Il est en outre avantageux que, lorsque l'unité de commande dispose de la bibliothèque et des moyens de sélection de code actif, l'étape de détermination, selon le deuxième mode de réalisation préféré, comprenne la sélection par l'unité de commande du code actif approprié dans la bibliothèque.

Il est également avantageux que, lorsque l'unité de commande dispose de moyens de génération de code actif, l'étape de détermination comprenne la génération du code actif approprié à la volée par l'unité de commande.

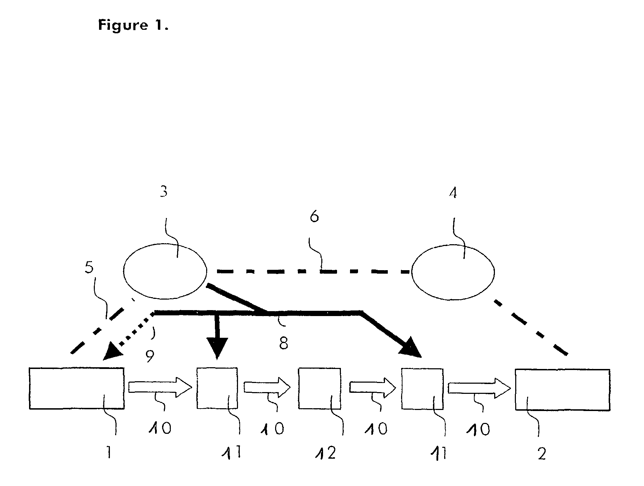

L'invention est maintenant décrite plus en détails dans la description de modes de réalisation préférés actuels et en référence à l'unique figure jointe, qui représente de façon schématique le déploiement de codes actifs par une unité de commande de signalisation 3 parmi les noeuds actifs d'un réseau actif.

La figure schématise une demande 5 de circuit virtuel (call request) émanant d'un terminal client 1 vers un terminal serveur 2. Les deux terminaux sont connectés au réseau, lequel comprend en outre une ou plusieurs unité(s) de commande de signalisation (signaling control unit(s)) 3,4 ainsi que des systèmes de routage ou noeuds, dont certains sont actifs 11 et d'autres non 12.

L'invention concerne donc un réseau de télécommunication actif comme indiqué dans la première revendication. Ces moyens d'envoi, pilotés indirectement ou non par les moyens de mise en place de circuit virtuel, assurent le déploiement (8) depuis l'unité de commande de signalisation (3) d'un code actif approprié vers le noeud actif (11).

Les noeuds actifs disposent de moyens de réception d'un code actif et d'au moins un environnement d'exécution traitant le code, cet environnement d'exécution pouvant être, par exemple, celui d'une machine virtuelle Java. Les terminaux peuvent par exemple être des ordinateurs personnels (PC) standards pourvus d'applications de type multimédia, telles que des applications de lecture en téléchargement d'un support vidéo ou audio stocké sur un ordinateur distant.

Ces terminaux peuvent également être des terminaux téléphoniques utilisant le protocole "voix sur IP" (de la terminologie anglaise « Voice over IP »).

La mise en place du circuit virtuel est gérée par une ou plusieurs unité(s) de commande de signalisation 3,4. Le nombre d'unité de commande de signalisation mis en oeuvre dans l'établissement d'une communication dépend de la localisation en terme de réseaux des terminaux concernés. Ces unités disposent de moyens de réception d'une demande 5 de circuit virtuel d'un terminal client 1 et de moyens de mise en place d'un circuit virtuel entre le terminal client 1 et un terminal serveur 2. De tels moyens peuvent utiliser les protocoles SIP ou H323, connus dans l'art, de même que tous les moyens communiquant avec le réseau IP dont sont classiquement pourvues les unités de commande de signalisation. Les moyens de mise en place de circuit virtuel pilotent des moyens d'envoi de code actif vers le noeud actif, comme il va être expliqué maintenant.

Les unités de commande de signalisation 3,4 (ou au moins certaines d'entre elles) disposent de préférence de moyens de détermination de code actif. La détermination des codes actifs peut s'effectuer en plusieurs étapes, comme décrit ci-après.

Une fois mis en place le circuit virtuel, les terminaux 1,2 et les unités de commande de signalisation 3,4 peuvent échanger des informations. Les terminaux 1,2 et les unités de commande de signalisation 3,4 peuvent alors s'accorder sur les caractéristiques à donner à la session de communication lors d'une étape de négociation. Ces caractéristiques peuvent, à l'issue de cette négociation, différer des caractéristiques souhaitées par une application du terminal client 1. La négociation comprend des échanges d'informations sur l'état instantané du réseau et peut également tenir compte des caractéristiques souhaitées par l'application du terminal client 1. Les caractéristiques négociées peuvent notamment inclure la bande passante et le cheminement du flux de données (c'est-à-dire, le circuit constitué par les noeuds qui vont servir à établir la communication entre les terminaux 1 et 2). Cependant, cette négociation peut être restreinte à une simple communication de caractéristiques allouables.

Ensuite, le résultat de la négociation peut être utilisé par l'une, au moins, des unités de commande de signalisation, par exemple celle 3 sollicitée par la demande 5 de circuit virtuel, afin de déterminer les codes actifs à envoyer (ou déployer) ainsi qu'une stratégie d'envoi (ou de déploiement) de ces codes. L'une, au moins, des unités de commande de signalisation, par exemple celle 3 sollicitée par la demande 5 de circuit virtuel, peut, par exemple, dérouler un algorithme pour déterminer les codes actifs appropriés, c'est-à-dire les codes actifs qui vont permettre d'obtenir les caractéristiques négociées lors de l'étape de négociation. Le code actif, déterminé par cet algorithme, joue deux rôles importants. Le premier est d'assurer que les paquets de données de cette communication soient convenablement transmis au regard des caractéristiques négociées. Leur second rôle est d'assurer l'exécution des mesures correctives nécessaires de manière à ce que le niveau de service effectif offert à la communication corresponde au niveau de service théorique négocié.

Ensuite, la décision de la stratégie d'envoi (ou de déploiement) peut, par exemple, tenir compte du nombre de codes actifs à déployer et du nombre de noeuds actifs susceptibles d'exécuter ces codes.

Le déploiement des codes actifs appropriés parmi les noeuds 11 du réseau s'effectue depuis l'une, au moins, des unités de commande de signalisation, par exemple celle 3 sollicitée par la demande 5 de circuit virtuel. Comme il a été décrit plus haut à titre indicatif, les codes appropriés peuvent être obtenus de différentes manières.

En outre, le déploiement des codes actifs peut être sélectif : c'est-à-dire qu'un code particulier peut être attribué à un noeud particulier.

Effectuer le déploiement de codes actifs depuis les unités de commande de signalisation permet au réseau actif d'offrir des fonctionnalités adaptées à la transmission du flux de données 10 (par exemple des données multimédia). Un tel avantage peut être obtenu du fait qu'une unité de commande de signalisation possède une connaissance globale du réseau à un temps donné, au contraire des noeuds et des terminaux qui ne possède qu'une connaissance locale du réseau. En effet, comme le montre le document EP- A -1 204 246, lorsqu'un code actif est émis sur un réseau IP par un terminal IP vers un autre terminal IP, il affecte tous les noeuds traversés, à des degrés divers, selon le procédé mis en oeuvre. Dans un tel cas de figure, l'absence de connaissance globale du réseau par ses noeuds complique l'envoi d'un code particulier à un noeud particulier.

En outre, effectuer le déploiement de codes actifs depuis des unités de commande de signalisation plutôt qu'un terminal permet donc d'éviter des problèmes d'inadéquation et d'éviter certains actes malveillants. En effet, un type de code particulier déployé par un terminal utilisateur pourrait viser l'obtention de caractéristiques de transmission différentes de celles négociées lors d'une étape de signalisation ou de celles prévues par un fournisseur de services pour l'utilisateur, ce dont prémunit la présente invention.

Il convient ici de comprendre "code actif" au sens large, c'est à dire un message comprenant éventuellement un en-tête de spécificités du code (comprenant notamment l'adresse du noeud destinataire et l'environnement d'exécution) et le code exécutable lui-même, comme décrit par exemple dans EP - A -1 204 246. Une telle structure de code actif permet de cibler un noeud particulier et alors d'y attribuer un code particulier lors de l'étape de déploiements des codes actifs.

En outre, par « des moyens de réception, de déploiement etc. de code actif », on entend des moyens opérant avec un ou des code(s) actif(s).

Lorsqu'un seul noeud actif est disponible sur le réseau, la stratégie d'envoi est adaptée en conséquence et le ou les codes actifs appropriés sont acheminés vers ce noeud. Lorsqu'une pluralité de noeuds actifs est disponible, les codes actifs sont acheminés vers chacun de ces noeuds, selon la stratégie décidée.

Les fonctionnalités offertes par les codes actifs déployés dans les noeuds actifs permettent en outre de superviser les messages de suivi du flux de données provenant d'un quelconque protocole média, tel que RTCP (Real-time Transport Control Protocol), permettant ainsi une adaptation dynamique du réseau à la qualité requise pour la transmission 9.

Dans une variante, il est possible de doter l'une au moins des unités de commande de signalisation 3,4 d'une bibliothèque de codes actifs (non-représentée sur la figure) pré-compilés. Dans cette variante, l'unité de commande de signalisation pourvue de la bibliothèque, par exemple l'unité 3, sélectionne les codes actifs appropriés parmi ceux disponibles dans la bibliothèque et ce, après l'étape dite de négociation impliquant les unités de commande de signalisation 3,4 et les terminaux 1,2.

Dans une autre variante, l'unité de commande de signalisation 3 qui est pourvue de la bibliothèque dispose en outre de moyens de compilation compilant les codes actifs sélectionnés lorsque ceux-ci ne sont disponibles qu'à l'état non-compilé. Ces moyens peuvent par exemple être des programmes exécutables installés sur l'unité de commande de signalisation même ou sur une machine connexe mais pilotée par l'unité de signalisation 3.

Dans une autre variante encore, la compilation s'effectue en adéquation avec une architecture dynamique des noeuds actifs 11 (tel type de compilation pour un code devant être exécuté dans tel type d'environnement disponible sur tel noeud etc.). Pour ce faire, l'unité de commande de signalisation déroule un algorithme approprié. Par exemple, sur la base de la négociation effectuée en temps réel, l'unité de commande de signalisation déclenche l'exécution d'un programme de compilation choisi parmi les divers programmes disponibles et correspondant à divers environnements d'exécution.

Dans une autre variante encore, des codes actifs appropriés sont générés à la volée par une unité de commande de signalisation 3 sur la base du résultat de la négociation effectuée en temps réel, et qui permet de générer le code source le plus approprié à la négociation, et d'ensuite le compiler selon une architecture dynamique des noeuds actifs 11 avant de déployer ces codes actifs appropriés, compilés, parmi les noeuds du réseau.

Les exemples de pilotages mentionnés ci-dessus sont donnés à titre non-limitatifs. Ainsi, l'invention s'applique également à des communications effectuées par paquets et ce, indépendamment du protocole IP. Par ailleurs, l'invention s'applique également au cas de téléconférences gérées par un terminal central, où il est possible d'assimiler chaque terminal de conférencier à un terminal téléphonique client 1 et le terminal central à un terminal serveur 2. De même, d'autres schémas de configurations de téléconférence peuvent être décomposés en schémas élémentaires impliquant un couple terminal client-serveur et pour lesquels l'invention peut s'appliquer, comme l'homme de l'art pourra l'apprécier.

## Revendications

1. Un réseau de télécommunication actif comprenant :
- un noeud actif (11) avec des moyens de réception de code actif et un environnement d'exécution de code actif, un code actif étant un programme exécutable permettant de modifier les fonctionnalités du réseau sur demande ; et
- une unité de commande de signalisation (3) comprenant :
• des moyens de réception de demande (5) de circuit virtuel entre un terminal client (1) et un terminal serveur (2) ;
• des moyens de mise en place de circuit virtuel ; et
• des moyens d'envoi de code actif vers le noeud actif, les moyens d'envoi étant pilotés par les moyens de mise en place de circuit virtuel.

2. Le réseau selon la revendication 1, **caractérisé en ce que** l'unité de commande de signalisation comprend en outre :
- une bibliothèque de codes actifs ; et
- des moyens de sélection de code actif dans la bibliothèque.

3. Le réseau selon la revendication 2, **caractérisé en ce que** l'unité de commande de signalisation (3) comprend en outre des moyens de compilation de code actif.

4. Le réseau selon l'une quelconque des revendications 1 à 3, **caractérisé en ce que** l'unité de commande de signalisation (3) comprend en outre des moyens de génération de code actif à la volée.

5. Le réseau selon l'une quelconque des revendications 1 à 4, utilisant le protocole IP**.**

6. Procédé de signalisation dans un réseau de télécommunication actif comprenant :
- un noeud actif (11) avec des moyens de réception de code actif et un environnement d'exécution de code actif, un code actif étant un programme exécutable permettant de modifier les fonctionnalités du réseau sur demande ; et
- une unité de commande de signalisation (3) comprenant :
• des moyens de réception de demande (5) de circuit virtuel entre un terminal client (1) et un terminal serveur (2) ;
• des moyens de mise en place de circuit virtuel ; et
• des moyens d'envoi de code actif vers le noeud actif, les moyens d'envoi étant pilotés par les moyens de mise en place de circuit virtuel ;
ce procédé comprenant les étapes :
□ réception d'une demande (5) de circuit virtuel
□ mise en place de circuit virtuel par l'unité de commande de signalisation entre un terminal client (1) et un terminal serveur (2) ;
□ envoi (8) depuis l'unité de commande de signalisation (3) d'un code actif approprié vers le noeud actif (11), l'envoi étant piloté par les moyens de mise en place.

7. Le procédé selon la revendication 6, comprenant en outre une étape de décision d'une stratégie d'envoi du code actif approprié par l'unité de commande de signalisation ; cette étape étant préalable à l'étape d'envoi, et étant postérieure à l'étape de mise en place de circuit virtuel.

8. Le procédé selon la revendication 6 ou 7, comprenant en outre une étape de détermination du code actif approprié par l'unité de commande de signalisation ; cette étape étant préalable à l'étape d'envoi, et postérieure à l'étape de mise en place de circuit virtuel.

9. Le procédé selon la revendications 8, comprenant en outre une étape de négociation entre les terminaux et l'unité de commande de signalisation (3) des caractéristiques d'une session de communication ; cette étape étant préalable à l'étape de détermination du code actif, et postérieure à l'étape de mise en place de circuit virtuel.

10. Le procédé selon la revendication 8, dans lequel, lorsque l'unité de commande (3) dispose de la bibliothèque et des moyens de sélection de code actif, l'étape de détermination comprend la sélection par l'unité de commande (3) du code actif approprié dans la bibliothèque.

11. Le procédé selon la revendication 8, dans lequel, lorsque l'unité de commande (3) dispose de moyens de génération de code actif, l'étape de détermination comprend la génération du code actif approprié à la volée par l'unité de commande (3).

## Patentansprüche

1. Aktives Telekommunikationsnetzwerk mit:
- einem aktiven Knoten (11) mit Mitteln zum Aktivcode-Empfangen und einer Aktivcode-Ausführungsumgebung, wobei ein Aktivcode ein ausführbares Programm ist, das es ermöglicht, die Funktionalitäten des Netzwerks auf Verlangen abzuändern; und
- einer Signalisierungssteuereinheit (3) mit:
• Mitteln zum Empfangen einer Anforderung (5) virtuelle Verbindung zwischen einem Client-Terminal (1) und einem Server-Terminal (2);
• Mitteln zum Einrichten der virtuellen Verbindung; und
• Mitteln zum Senden des Aktivcodes an den aktiven Knoten, wobei die Sendemittel durch die Mittel zur Einrichtung der virtuellen Verbindung gesteuert werden.

2. Netzwerk gemäß Anspruch 1, **dadurch gekennzeichnet, dass** die Signalisierungssteuereinheit außerdem folgendes beinhaltet:
- eine Aktivcode-Bibliothek; und
- Mittel zur Aktivcode-Auswahl aus der Bibliothek.

3. Netzwerk gemäß Anspruch 2, **dadurch gekennzeichnet, dass** die Signalisierungssteuereinheit (3) außerdem Mittel zur Aktivcode-Kompilierung beinhaltet.

4. Netzwerk gemäß einem der Ansprüche 1 bis 3, **dadurch gekennzeichnet, dass** die Signalisierungssteuereinheit (3) außerdem Mittel zur Aktivcode-Generierung im Vorübergehen beinhaltet.

5. Netzwerk gemäß einem der Ansprüche 1 bis 4, welches das IP-Protokoll verwendet.

6. Signalisierungsverfahren in einem aktiven Telekommunikationsnetzwerk mit:
- einem aktiven Knoten (11) mit Mitteln zum Aktivcode-Empfang und einer Aktivcode-Ausführungsumgebung, wobei ein Aktivcode ein ausführbares Programm ist, das es ermöglicht, die Funktionalitäten des Netzwerks auf Verlangen abzuändern; und
- einer Signalisierungssteuereinheit (3) mit:
• Mitteln zum Empfangen einer Anforderung (5) virtuelle Verbindung zwischen einem Client-Terminal (1) und einem Server-Terminal (2);
• Mitteln zum Einrichten der virtuellen Verbindung; und
• Mitteln zum Senden des Aktivcodes an den aktiven Knoten, wobei die Sendemittel durch die Mittel zur Einrichtung der virtuellen Verbindung gesteuert werden.
wobei dieses Verfahren die folgenden Schritte beinhaltet:
o Empfang einer Anforderung (5) virtuelle Verbindung
o Einrichtung virtuelle Verbindung durch die Signalisierungssteuereinheit zwischen einem Client-Terminal (1) und einem Server-Terminal (2);
o von der Signalisierungssteuereinheit (3) aus Senden (8) eines geeigneten Aktivcodes an den aktiven Knoten (11), wobei die Sendung durch die Mittel zur Einrichtung gesteuert wird.

7. Verfahren gemäß Anspruch 6, das außerdem einen Entscheidungsschritt betreffend die Sendestrategie des geeigneten Aktivcodes durch die Signalisierungssteuereinheit beinhaltet; dieser Schritt liegt vor dem Sendeschritt und nach dem Schritt Einrichtung virtuelle Verbindung.

8. Verfahren gemäß Anspruch 6 oder 7, das außerdem einen Schritt Festlegung des geeigneten Aktivcodes durch die Signalisierungssteuereinheit beinhaltet; dieser Schritt liegt vor dem Sendeschritt und hinter dem Schritt Einrichtung virtuelle Verbindung.

9. Verfahren gemäß Anspruch 8, das außerdem zwischen den Terminals und der Signalisierungssteuereinheit (3) einen Verhandlungsschritt betreffend die Charakteristika einer Kommunikationssitzung beinhaltet; wobei dieser Schritt vor dem Schritt Festlegung des Aktivcodes und nach dem Schritt Einrichtung virtuelle Verbindung angesiedelt ist.

10. Verfahren gemäß Anspruch 8, bei dem, wenn die Steuereinheit (3) über die Bibliothek und Mittel zur Auswahl des Aktivcodes verfügt, der Festlegungsschritt die Auswahl des geeigneten Aktivcodes aus der Bibliothek durch die Steuereinheit (3) beinhaltet.

11. Verfahren gemäß Anspruch 8, bei dem, wenn die Steuereinheit (3) über Mittel zur Aktivcode-Generierung verfügt, der Festlegungsschritt die Generierung des geeigneten Aktivcodes durch die Steuereinheit (3) im Vorübergehen beinhaltet.

## Claims

1. An active telecommunications network comprising:
- an active node (11) comprising active code reception means and an active code execution environment, an active code being an executable program enabling the functions of the network to be modified on demand; and
- a signaling control unit (3) comprising:
- means for receiving a request (5) to set up a virtual circuit between a client terminal (1) and a server terminal (2);
- virtual circuit set-up means; and
- sending means for sending active code to the active node, the sending means being controlled by the virtual circuit set-up means.

2. A network according to claim 1, **characterized in that** the signaling control unit further comprises:
- an active code library; and
- means for selecting active code in the library.

3. A network according to claim 2, **characterized in that** the signaling control unit (3) further comprises active code compilation means.

4. A network according to any one of claims 1 to 3, **characterized in that** the signaling control unit (3) further comprises means for generating active code on the fly.

5. A network according to any one of claims 1 to 4 adapted to use the Internet Protocol (IP).

6. A signaling method for use in an active telecommunications network comprising:
- an active node (11) comprising active code reception means and an active code execution environment, an active code being an executable program enabling the functions of the network to be modified on demand; and
- a signaling control unit (3) comprising:
- means for receiving a request (5) to set up a virtual circuit between a client terminal (1) and a server terminal (2);
- virtual circuit set-up means; and
- sending means for sending active code to the active node, the sending means being controlled by the virtual circuit set-up means;
the method comprising the steps of:
- receiving a virtual circuit request (5);
- the signaling control unit setting up the virtual circuit between a client terminal (11) and a server terminal (2); and
- a step (8) of sending an appropriate active code from the signaling control unit (3) to the active node (11), with sending being controlled by set-up means.

7. A method according to claim 6, further comprising, prior to the sending step and after the step of setting up the virtual circuit, a step of deciding on a strategy for sending the appropriate active code by the signaling control unit.

8. A method according to claim 6 or claim 7, further comprising, prior to the sending step and after the step of setting up the virtual circuit, a step of the signaling control unit determining the appropriate active code.

9. A method according to claim 8, further comprising, prior to the step of determining the active code and after the step of setting up the virtual circuit, a step of negotiation between the terminals and the signaling control unit (3) of the characteristics of a communications session.

10. A method according to claim 8, wherein, when the control unit (3) comprises the active code library and selection means, the determination step comprises the selection by the control unit (3) of the appropriate active code in the library.

11. A method according to claim 8, wherein, when the control unit (3) comprises active code generation means, the determination step comprises the generation of the appropriate active code on the fly by the control unit (3).
